(19)

Europäisches
Patentamt
European
Patent Office
Office européen
des brevets

(11) **EP 4 675 241 A1**

(12) **EUROPEAN PATENT APPLICATION**

(43) Date of publication:
**07.01.2026 Bulletin 2026/02**

(21) Application number: **24185681.4**

(22) Date of filing: **01.07.2024**

(51) International Patent Classification (IPC):
**G01H 9/00** $^{(2006.01)}$ **B61K 9/08** $^{(2006.01)}$
**B61L 1/06** $^{(2006.01)}$

(52) Cooperative Patent Classification (CPC):
**G01H 9/004; B61K 9/08; B61L 1/06; B61L 27/57**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sensonic GmbH
4780 Schärding (AT)**

(72) Inventors:
• **Deetlefs, Richard
Wien (AT)**
• **Fuchs, Florian
Pocking (DE)**
• **Wiesmeyr, Christoph
Wien (AT)**

(74) Representative: **Epping - Hermann - Fischer
Patentanwaltsgesellschaft mbH
Schloßschmidstraße 5
80639 München (DE)**

(54) **COMPUTER-IMPLEMENTED METHOD, DATA PROCESSING SYSTEM, AND COMPUTER PROGRAM PRODUCT FOR DATA CURATION**

(57)     A computer-implemented method is provided. The method comprises receiving (S1) vibration data (VD), wherein the vibration data (VD) is inferred by back-scattered laser light from a fiber optic cable (21) and contains information of vibrational energy at a plurality of measurement segments (22, 23) of the fiber optic cable (21); determining (S2) whether a vibrational energy change during a recent time window ($\Delta tr$) in at least one measurement segment exceeds a predefined amplitude; if the predefined amplitude is exceeded, determining (S3) whether the vibrational energy change in the at least one measurement segment (22, 23) exceeds a predefined duration (D), and/or whether the vibrational energy change for measurement segments in proximity to the at least one measurement segment (22, 23) exceeds a predefined spatial extent (SE), thereby determining whether a data cluster (DC) representing the vibrational energy change is present in the vibration data (VD); and providing (S4) an event signal (ES) for the case that such data cluster (DC) is identified in the vibration data (VD). Further, a data processing system and a computer program product are provided.

VD

FIG. 7

**Description**

The present application relates to a computer-implemented method, a data processing system, and to a computer program product.

For monitoring a linear asset, for example a railway track, a fiber optic cable can be arranged along the linear asset. Laser light propagating through the fiber optic cable may be backscattered by scatter sites in the fiber optic cable. This backscattered laser light infers vibration data containing information of vibrational energy at a plurality of measurement segments of the fiber optic cable. The fiber optic cable may have a length of several kilometers and may comprise thousands of measurement segments. For each measurement segment vibration data may be collected in real time. Possibly, a measurement resolution may be below one millisecond, for example around 500 microseconds. Hence, the vibration data may contain a huge amount of data. However, only a small part of the vibration data contains relevant information. Such relevant information may refer to an event that took place at one or more measurement segments and which caused vibrations propagating as seismic and/or acoustic waves along the fiber optic cable. Such events may be rare, and it might be challenging to find these events in the huge amount of vibration data. Furthermore, a bandwidth limit would quickly be reached if all vibration data were to be uploaded to a cloud or computing network for finding and classifying such events in the available data.

It is an objective to provide a computer-implemented method that efficiently enables data curation and pre-selection. It is further an objective to provide a data processing system and a computer program product that efficiently enable data curation and pre-selection.

These objectives are achieved with the independent claims. Further embodiments are the subject of dependent claims.

According to at least one embodiment, a computer-implemented method is provided. The computer-implemented method describes an algorithm which can be stored on a computer or a storage medium. The computer-implemented method can be configured to be run on a computer. The computer-implemented method may be denoted as method in the following. The method may be a method for data curation and/or data pre-selection and/or data acquisition.

According to at least one embodiment, the method comprises receiving vibration data, wherein the vibration data is inferred by backscattered laser light from a fiber optic cable and contains information of vibrational energy at a plurality of measurement segments of the fiber optic cable.

The received vibration data can be inferred by optical signals that represent vibrations detected by fiber optic sensing. In particular, the optical signals can be backscattered signals of an input signal which is provided to the fiber optic cable. The fiber optic cable can be denoted as optical fiber in the following. The optical fiber can extend along a linear asset. The optical fiber can be arranged within the ground close to the linear asset. It is further possible that the optical fiber is arranged above the ground close to the linear asset. The optical fiber extends approximately parallel to the linear asset. The input signal can be an optical signal, for example a laser pulse. The input signal is provided to the optical fiber at an input of the optical fiber. A part of the laser light is reflected back to the input since the laser light is scattered at scatter sites, as for example impurities in the optical fiber which can be natural or artificial. Changes in the backscattered signal are related to physical changes in the optical fiber which can be caused by noise, structure-borne noise, vibrations, or soundwaves along the optical fiber. Therefore, a backscattered signal can be detected to determine noise that occurs around the linear asset. By evaluating the backscattered signal, the location of the noise can be determined. Thus, the backscattered signals can be evaluated to infer vibrations at different positions along the linear asset corresponding to the measurement segments of the fiber optic cable and/or at different points in time. Each measurement segment may correspond to one or several meters, for example at least 1 meter and at most 20 meters of the fiber optic cable.

According to at least one embodiment, the method comprises determining whether a vibrational energy change during a recent time window in at least one measurement segment exceeds a predefined amplitude.

The measurement segments of the fiber optic cable are subject to vibrations, fluctuations, and noise at each instant of time. In other words, the vibration data is noisy, wherein an amplitude of the measured vibrational energy is small. However, if a vibrational energy change exceeds a predefined amplitude, this may indicate that an event took place at the measurement segment in the recent time window. The recent time window may refer to a recent measurement period. The recent time window may cover several seconds, for example, the last 1 to 10 seconds of measurement.

According to at least one embodiment, the method comprises, if the predefined amplitude is exceeded, determining whether the vibrational energy change in the at least one measurement segment exceeds a predefined duration, and/or whether the vibrational energy change for measurement segments in proximity to the at least one measurement segment exceeds a predefined spatial extent, thereby determining whether a data cluster representing the vibrational energy change is present in the vibration data.

That the vibrational energy change exceeds the predefined duration can mean that an increased vibrational energy can be observed in the at least one measurement segment also for previous or subsequent measurement periods or time windows, respectively. The predefined duration comprises, for example, two, three, five or ten subsequent time windows corresponding to at least 2 seconds and at most 100 seconds. That the vibrational energy change exceeds a predefined spatial extent can mean that an increased vibrational energy can also be observed in other measurement segments adjacent to or in vicinity of the at least one measurement segment. For example, if an increased vibrational energy can be observed in the next, the second next, the third next and/or the fourth next measurement segment, the vibrational energy change can be considered to have a spatial extent along the fiber optic cable. For example, the predefined spatial extent corresponds to two, three, five, ten, or fifty adjacent measurement segments.

Determining that the vibrational energy change exceeds a predefined duration and/or predefined spatial extent means that the vibration data comprises a data cluster corresponding to measurement segments and/or time windows showing an increased vibrational energy. Hence, the proposed method can be used to find and identify data clusters of increased vibrational energy in the vibration data.

According to at least one embodiment, the method comprises providing an event signal for the case that such data cluster is identified in the vibration data.

This can mean that the event signal is realized as alert indicating that an event corresponding to the data cluster took place along the fiber optic cable. However, it is also possible that the event signal is realized as data structure based on the data cluster. For example, the event signal comprises the portion of the vibration data corresponding to the data cluster, or data derived from the data cluster. The event signal may contain information about an impact location, and/or an amplitude of the vibrational energy change, and/or a velocity of propagation of seismic waves along the linear asset, and/or a frequency band of the vibrational energy change, and/or a duration of the vibrational energy change, and/or its spatial extent.

According to at least one embodiment, a computer-implemented method comprises receiving vibration data, wherein the vibration data is inferred by backscattered laser light from a fiber optic cable and contains information of vibrational energy at a plurality of measurement segments of the fiber optic cable; determining whether a vibrational energy change during a recent time window in at least one measurement segment exceeds a predefined amplitude; if the predefined amplitude is exceeded, determining whether the vibrational energy change in the at least one measurement segment exceeds a predefined duration, and/or whether the vibrational energy change for measurement segments in proximity to the at least one measurement segment exceeds a predefined spatial extent, thereby determining whether a data cluster representing the vibrational energy change is present in the vibration data; and providing an event signal for the case that such data cluster is identified in the vibration data.

The computer-implemented method described here is based on the following considerations, among others.

Vibration data collected by fiber optic sensing during monitoring a linear asset may represent a huge amount of data, in which events of interest are hard to find. For example, such events represent hazardous situations, and it is important to record and process them. The proposed method uses an efficient algorithm to detect such events by determining sudden changes in vibrational energy at an impact location and up to several 100 meters away. Data clusters linked to that vibrational change are identified in the vibration data, so that a universal energy change detector, that is independent from specific signal shapes or signal origins, is realized. The proposed algorithm is looking for energy change and impact, thereby looking for clusters of energy change in the vibration data.

Further, it may be desired to identify events corresponding to the data clusters in the vibration data. If the linear asset along which the fiber optic cable is arranged is a railway track, for example, it might be important to know whether the vibrational energy change is caused by a moving rail vehicle or by rockfall. However, uploading the entire vibration data to a computing network/ cloud/ artificial intelligence for classifying the type of event is computationally inefficient or even impossible due to the huge amount of data. The proposed method can advantageously be used to curate, pre-select and/or filter the vibration data, such that only potentially interesting portions of the vibration data are further processed. This means that the amount of data to be transmitted or uploaded is reduced, thereby avoiding bandwidth issues.

According to at least one embodiment of the computer-implemented method, the method is carried out during monitoring a linear asset, along which the fiber optic cable is arranged. This can mean that the method is carried out for monitoring the linear asset and/or for analyzing and/or filtering and/or curating the vibration data collected during monitoring of the linear asset. This can further mean that the method is carried out in real time, i.e. as soon as the vibration data is available. Advantageously, the linear asset can be monitored for potentially hazardous events and/or events that do not belong to a normal operating mode of the linear asset.

According to at least one embodiment of the computer-implemented method, the linear asset is one of a railway track, a road, a pipeline, a power line, a cable, and a fence. Thus, different linear assets may be monitored by fiber optic sensing. In turn, vibration data can be collected and analyzed from a plurality of different linear assets or, respectively, from fiber optic cables arranged along such linear assets.

According to at least one embodiment of the computer-implemented method, the event signal indicates at least one type of event. The event can be at least one of the following types: movement of a human, an animal, or an object; movement of a rail vehicle;

movement of rail vehicle over a broken or damaged rail; partial or complete derailment of a rail vehicle; rockfall; land slide; debris flow; flash over; maintenance work; thermal material expansion; leaking pipe; and digging. In order to be detectable by fiber optic sensing the event has to take place within a certain area or volume around the optical fiber. Thus, with the computer-implemented method, different types of events can be recognized. The computer-implemented method can filter the vibration data for different events of interest.

According to at least one embodiment of the computer-implemented method, the fiber optic cable is arranged along a linear asset, and the method further comprises determining whether the data cluster in the vibration data represents a normal operating mode of the linear asset and suppressing the event signal for that case.

In the above example of a railway track, a normal operating method of the linear asset can be the movement of a rail vehicle. The detection of a rail vehicle movement by fiber optic sensing is possible and filtering the vibration data is this regard can be desired. However, the method can also be used to detect and find unusual and potentially hazardous events. To distinguish a normal event from an unnormal event, the method may implement a pattern recognition algorithm. For example, the method may filter data clusters in the vibration data showing patterns of vibrational energy changes typical for the normal operating mode. In particular, such vibrational energy changes may happen in specific frequency bands and/or show a specific propagation along the linear asset. By suppressing the event signal in that case further reduces transmitted data and avoids false alerts.

According to at least one embodiment of the computer-implemented method, the method further comprises transmitting the event signal to a user and/or a computing network and/or to an artificial intelligence for classifying a type of event represented by the event signal.

As mentioned above, the event signal may represent a reduced amount of data based on the data cluster that has been identified. The user and/or the computing network and/or the artificial intelligence can classify the type of event based on the event signal. This can mean that the event signal contains information that enables the user and/or the computing network and/or the artificial intelligence to identify the event. For example, the artificial intelligence is trained with training data to identify the type of event based on the event signal. As mentioned above, the event signal may comprise the portion of the vibration data corresponding to the data cluster, and/or information derived thereof. It might be vital to identify the type of event that occurred during the measurement. The method can advantageously pre-select and filter the vibration data, such that a selection, i.e. the event signal, can be output for further processing and classifying.

According to at least one embodiment of the computer-implemented method, determining whether a vibrational energy change during a recent time window in at least one measurement segment exceeds a predefined amplitude comprises Z-score normalization of the vibration data for each measurement segment.

Z-score normalization, also known as standardization, is a statistical method used to transform and rescale data so that it conforms to a standard normal distribution. In this process, each data point in a dataset is transformed so that a mean value (average) is 0 and a standard deviation is 1. Z-score normalization makes different datasets or variables comparable by placing them on the same scale. This is particularly useful when dealing with features measured in different units or with different ranges. Further, Z-scores can help identify outliers in a dataset. Data points with Z-scores significantly different from the mean may be considered outliers, helping to detect and handle anomalies. In the present case, Z-score normalization may be carried out for each measurement segment. Advantageously, the vibrational energy change can be determined efficiently.

According to at least one embodiment of the computer-implemented method, a vibration data sample for calculating the Z-score is updated in real time.

This can mean that at each point in time the vibration data sample comprises the most recent measurement values. The vibration data sample for calculating the Z-score in each measurement segment can comprise a fixed number of measurement values. For each new measurement value in the sample, the oldest measurement value can be deleted from the sample. Thus, the method may implement a computationally efficient "rolling" algorithm to form the vibration data sample.

According to at least one embodiment of the computer-implemented method, the vibration data sample for calculating the Z-score includes vibration data of the recent time window and vibration data of a past time window. According to at least one embodiment, a ratio between the duration of the recent time window and the duration of the past time window is constant and less than 1.

For example, the recent time window covers at least 1 second and at most 10 seconds of the measurement period. A first mean value of the vibrational energy is calculated using measurement values of the recent time window. For example, the past time window covers at least the last 30 seconds of the measurement period. A second mean value of the vibrational energy is calculated using measurement values of the past time window. Further, a standard deviation of the vibrational energy is calculated using the measurement values of the past time window. Z-scores are calculated by subtracting the second mean value from the first mean value and dividing the result by the standard deviation. Thus, the method may implement a computationally efficient "rolling" algorithm to determine the vibrational energy change.

According to at least one embodiment of the computer-implemented method, determining the spatial extent of the vibration energy change comprises applying a tolerance function for disrespecting measurement segments in proximity to the at least one measurement segment that are not showing the vibrational energy change.

Some measurement segments may not show a vibrational energy change although an event took place. For example, these measurement segments are poorly coupled to the environment, such that an impact is not transferred to the measurement segment. The measurement segment is not affected by the vibrational energy change caused by the impact. If this is the case, a data cluster in the vibration data may have gaps that prevent the method from recognizing it as data cluster. By applying a tolerance function such gaps can be disrespected. For example, a threshold number for consecutive unaffected measurement segments is defined. As long as the number of measurement segments corresponding to the gap is smaller than the threshold number, the data cluster is identified as such.

According to at least one embodiment of the computer-implemented method, the method further comprises selecting at least one predetermined frequency band of the vibration data for determining the vibrational energy change.

The vibration data may contain data corresponding to a plurality of frequency bands. However, it may be sufficient to look for vibrational energy changes in only one or two frequency bands. For example, the vibrational energy is monitored for a change in the 1-200 Hz band and/or in the 750-1500 Hz band. Further frequency bands are also possible. By restricting the vibration data to certain frequency bands, the data to be transmitted can be further reduced. Besides, irrelevant frequency bands can be disrespected.

According to at least one embodiment of the computer-implemented method, determining whether a data cluster representing the vibrational energy change is present in the vibration data is simultaneously performed for a plurality of subsets of the vibration data. According to at least one embodiment, respective identified data clusters are combined according to a predefined rule to provide the event signal.

For example, subsets of vibration data refer to different frequency bands. It is however also possible that the subsets refer to characteristics of the vibration data other than frequency. For example, a subset may refer to data derived from the vibration data, as derivatives in space or time. In another example, only values that are above a specific amplitude level of the vibrational energy belong to a subset. A subset may refer to a sample of the vibration data. Determining whether a data cluster is present in the vibration data can be carried out in parallel for the plurality of subsets. For example, the method looks for a vibrational energy change in the 10-60 Hz band and in the 900-1000 Hz band in parallel. That respective identified data clusters are combined according to a predefined rule to provide the event signal can for example mean that an event signal is only provided if a data cluster is identified for each subset. It can also mean that an event signal is provided if X out of Y subsets show a respective data cluster, wherein X and Y are natural numbers. Further rules are also possible. For example, an event signal is provided if a data cluster is identified in the 10-60 Hz band and in at least one other subset of the vibration data. Advantageously, a confidence level for finding events can be increased by respecting different subset of the vibration data.

In addition, a data processing system is provided. The data processing system can be configured to carry out the computer-implemented method described above. Therefore, features relating to the computer-implemented method are also disclosed for the data processing system, and vice versa. The processing system may be realized as data acquisition system.

According to at least one embodiment, the data processing system comprises a receiving unit configured to receive vibration data, wherein the vibration data is inferred by backscattered laser light from a fiber optic cable and contains information of vibrational energy at a plurality of measurement segments of the fiber optic cable. The receiving unit may receive the vibration data from a detection unit of an optical fiber sensor. Thus, an input of the receiving unit may be coupled to an output of the detection unit. The receiving unit may receive the vibration data in real time. The vibration data may represent measurement values of the fiber optic sensor.

According to at least one embodiment, the data processing system comprises an evaluation unit configured to determine whether a vibrational energy change during a recent time window in at least one measurement segment exceeds a predefined amplitude, and if the predefined amplitude is exceeded, to determine whether the vibrational energy change in the at least one measurement segment exceeds a predefined duration, and/or whether the vibrational energy change for measurement segments in proximity to the at least one measurement segment exceeds a predefined spatial extent, thereby determining whether a data cluster representing the vibrational energy change is present in the vibration data.

The evaluation unit may be coupled at its input side to an output of the receiving unit.

According to at least one embodiment, the data processing unit comprises a transmitter unit configured to provide an event signal for the case that such data cluster is identified in the vibration data. The transmitter unit may be coupled at its input side to an output of the evaluation unit. The event signal may be implemented as alert or as data structure based on the identified data cluster, as mentioned above.

The receiving unit, the evaluation unit and/or the transmitter unit may be implemented in hardware or software. The data processing system may be part of the optical fiber sensor or may be arranged outside the optical fiber sensor. The data processing unit may be or may be comprised by a computer. The data processing system may be connected to a computing network. In particular, the transmitter unit may be configured to transmit the event signal to the computing network for further analysis of the data cluster.

According to at least one embodiment, a data processing system comprises a receiving unit configured to receive vibration data, wherein the vibration data is inferred by back-scattered laser light from a fiber optic cable and contains information of vibrational energy at a plurality of measurement segments of the fiber optic cable; an evaluation unit configured to determine whether a vibrational energy change during a recent time window in at least one measurement segment exceeds a predefined amplitude, and if the predefined amplitude is exceeded, to determine whether the vibrational energy change in the at least one measurement segment exceeds a predefined duration, and/or whether the vibrational energy change for measurement segments in proximity to the at least one measurement segment exceeds a predefined spatial extent, thereby determining whether a data cluster representing the vibrational energy change is present in the vibration data; and a transmitter unit configured to provide an event signal for the case that such data cluster is identified in the vibration data.

The data processing system has the same advantages as described above in connection with the computer-implemented method. In particular, the data processing system enables finding interesting events in a huge amount of vibrational data. Further, the data processing system enables data curation and/or data pre-selection of the vibration data before uploading relevant data to a computing network or cloud for event classification. Thus, bandwidth issues can be avoided.

According to at least one embodiment, the data processing system further comprises a processing unit configured to process the vibration data. For example, the processing unit is configured to filter the vibration data in frequency space. The processing unit can be implemented as hardware or as software. The processing unit can be arranged between the receiving unit and the evaluation unit. The processing unit can prepare a plurality of subsets of vibration data, each subset corresponding to a different characteristic of the vibration data. For example, each subset corresponds to a different frequency band of the vibration data. The evaluation unit may determine whether a data cluster is present in the vibration data for each subset in parallel. By filtering specific frequencies, the amount of data to be transmitted can be further reduced. Besides, by respecting different frequency bands, a confidence level for identifying events can be increased.

In addition, a computer program product is provided. According to at least one embodiment, the computer program product comprises instructions which, when the program is executed by a computer, cause the computer to carry out the computer-implemented method described above. Therefore, features relating to the computer-implemented method are also disclosed for the computer program product, and vice versa. The computer program product has the same advantages as described above in connection with the computer-implemented method.

The following description of figures may further illustrate and explain aspects of the computer-implemented method, the data processing system, and the computer program product. Components and parts of the data processing system and steps of the computer-implemented method that are functionally identical or have an identical effect are denoted by identical reference symbols. Identical or effectively identical steps, components and parts might be described only with respect to the figures where they occur first. Their description is not necessarily repeated in successive Figures.

Figures 1 and 2 show exemplary embodiments of an optical fiber cable arranged along a linear asset.

Figure 3 shows a representation of exemplary vibration data visualized in a space-vs-time diagram.

Figure 4 shows an exemplary embodiment of a computer-implemented method.

Figures 5 and 6 show further exemplary embodiments of the computer-implemented method based on a vibration data representation.

Figure 7 shows an exemplary embodiment of a data processing system.

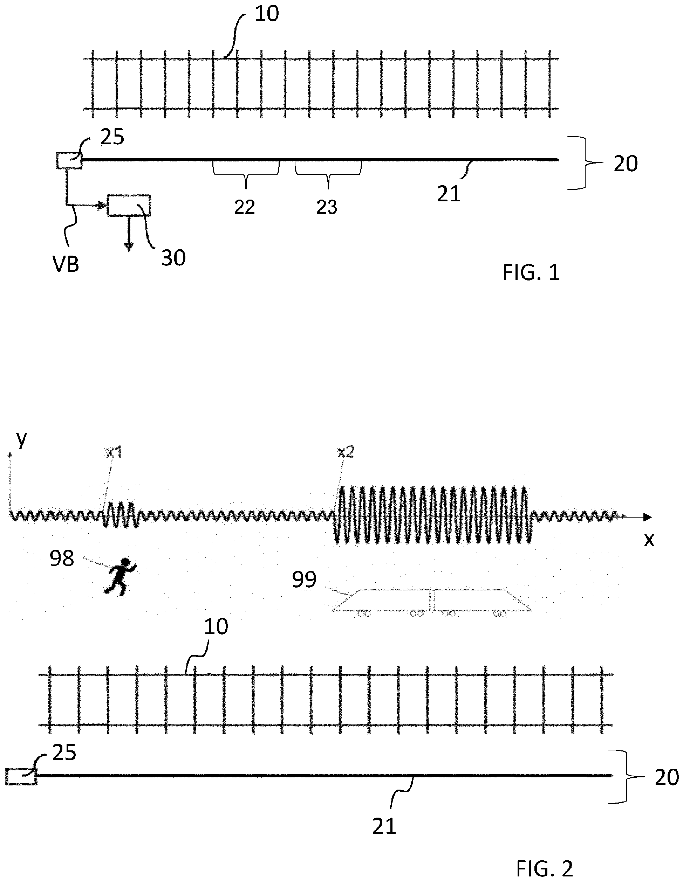

Figure 1 shows a fiber optic sensor cable 21 that is arranged along a linear asset 10, which can be a railway track 10, for example. The fiber optic cable 21 can be part of a fiber optic sensor 20. The fiber optic sensor 20 comprises the fiber optic cable 21 that can be denoted optical fiber in the following. The optical fiber 21 comprises a plurality of measurement segments, for example a measurement segment 22 and a further measurement segment 23. Furthermore, the fiber optic sensor 20 comprises a detection unit 25. The detection unit 25 collects vibration data VB from the fiber optic cable 21. The vibration data VD is inferred by laser light backscattered from the fiber optic cable 21 and contains information of vibrational energy at the plurality of measurement segments 22, 23 of the fiber optic cable 21. For example, the laser light is emitted by a laser light source that is integrated in the detection unit 25. The detection unit 25 is connected with a data processing system 30. The detection unit 25 collects the vibration data VD from the fiber optic cable 21 and transmits it to the data processing system 30. Thus, the linear asset 10 can be monitored by means of fiber optic sensing.

With figure 2 the principle of fiber optic sensing is shown. As in figure 1, the optical fiber 21 extends along the linear asset 10, which in this case is a railway track 10. The detection unit 25 is connected with the optical fiber 21. It is schematically shown that on the railway track 10 a rail vehicle 99 can move. The diagram in the top part of figure 2 shows vibration data inferred by backscattered signals detected by the detection unit 25. On the x-axis the distance along the optical fiber 21 is plotted and on the y-axis an amplitude of the vibration is plotted. At a first position $x1$ along the optical fiber 21 a person 98 is walking. Thus, the amplitude of the vibration is higher at the first position $x1$ than at other positions where no mechanical vibrations occur. At a second position $x2$ along the optical fiber 21 a rail vehicle 99 is moving. Thus, the amplitude of the vibration is higher at the second position $x2$ than at the first position $x1$ where less mechanical vibrations occur.

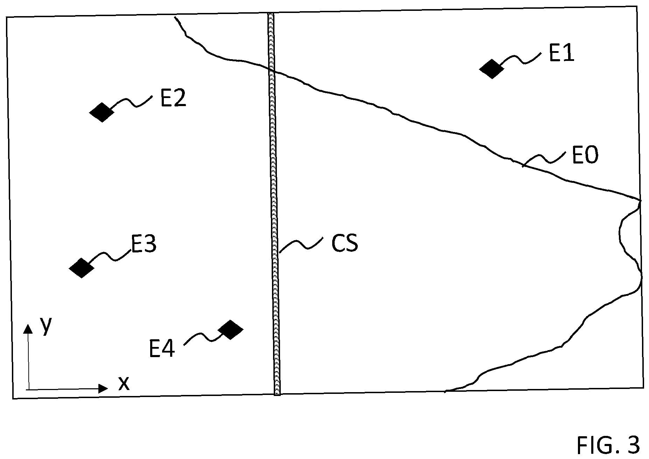

With figure 3 a representation of the vibration data VD is shown in a space-vs-time diagram. On the x-axis the distance along the fiber optic cable 21 is plotted in arbitrary units. Said distance relates to different measurement segments 22, 23 along the fiber optic cable 21, as shown in figure 1. For example, the x-axis corresponds to 50 kilometers of fiber optic cable with thousands of measurements segments. On the y-axis the time is plotted in arbitrary units along the arrow, this means from bottom to top. For example, the y-axis corresponds to 1 hour of measurement time. The third axis is not shown in this two-dimensional representation, however, on that axis the amplitude of the vibrational energy could be plotted. As mentioned above, the fiber optic cable 21 may be arranged along a linear asset 10, which, in this example, is a railway track 10. However, other linear assets 10 are also possible. For example, the linear asset 10 is one of a railway track, a road, a pipeline, a power line, a cable, and a fence.

Given the dimensions of the x- and y-axis, the vibration data VD contains a huge amount of information/data. Under normal conditions nearly no distinct features can be discriminated in the vibration data VD. This means, for the white areas in the diagram the amplitude of the vibrational energy is not increased. A continuous signal CS is shown during the entire measurement period at a fixed position, i.e. at a specific measurement segment along the fiber optic cable 21. This continuous signal CS corresponds, for example, to a bridge over which the railway track runs, whereby this bridge is exposed to vibrations. For these reasons, the vibrational energy is increased at this position. Further, the diagram shows a signal E0 varying in space and time. This signal E0 may correspond to an event, wherein said event may be the movement of a rail vehicle. The amplitude of the vibration data is increased at the positions where the rail vehicle moves during the measurement period. Thus, the movement of a rail vehicle is represented by an area of increased amplitude of the vibration data in this diagram.

The diagram shows further events E1 to E4, which are distributed sparingly in the vibration data, i.e.

over the measurement segments and the measurement time. These events E1 to E4 may correspond to types of events which are of interest. For example, the event E1 corresponds to a person walking along or over the linear asset 10. For example, the event E2 corresponds to rockfall on the linear asset 10. For example, the event E3 corresponds to maintenance work at the linear asset 10. Finally, the event E4 may correspond to a thermal expansion of the linear asset 10. Further events of interest are possible, for example, movement of an animal or an object, movement of rail vehicle over a broken or damaged rail, partial or complete derailment of a rail vehicle, land slide or debris flow around the linear asset 10, flash over, leaking pipe, digging. All these events generate vibrations. Thus, they lead to an increase of vibrational energy at or in the vicinity of the fiber optic cable. Further, the vibrations propagate as seismic and/or acoustic waves. If an event took place at a first measurement segment, vibrations can also be observed at neighboring measurement segments. The above-mentioned events may represent hazardous situations and it is important to record and process them. However, it may be hard to find such events of interest in the huge amount of vibration data VD.

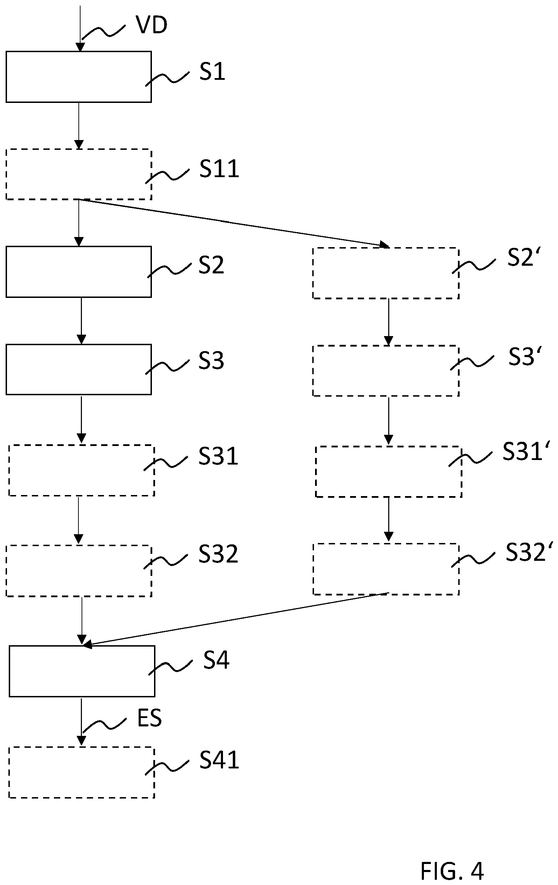

With figure 4 a computer-implemented method according to an embodiment is shown schematically. The method can be used to find events of interest in vibration data. In general, the method can be used for data curation and/or data pre-selection, in particular in situations, in which a huge amount of vibration data is available, while only a small amount of interesting events is "hidden" in this data. The method comprises the following steps that are not necessarily carried out in this order but can be carried out in this order.

In a step S1, vibration data VD is received. The vibration data VD is inferred by backscattered laser light from a fiber optic cable 21 and contains information of vibrational energy at a plurality of measurement segments 22, 23 of the fiber optic cable 21. As mentioned above, the vibration data VD may represent a huge amount of data and, usually, no distinct features can be discriminated in the vibration data VD, as events that would lead to an increase of vibrational energy are rare.

In a step S2, it is determined whether a vibrational energy change during a recent time window $\Delta tr$ in at least one measurement segment exceeds a predefined amplitude. The vibration data may be updated in real time. Thus, the vibration data may refer to live data. The recent time window $\Delta tr$ may thus refer to a current measurement period. The vibrational energy is subject to noise. Thus, the vibration data VD is noisy. However, certain types of events significantly increase the vibrational energy such that a signal can be distinguished from the noise floor. Thus, in this step of the method sudden changes in the vibrational energy at a measurement segment (e.g. an impact location) are detected.

In a step S3, if the predefined amplitude is exceeded, it is determined whether the vibrational energy change in the at least one measurement segment (i.e. the impact location) exceeds a predefined duration D. In addition or alternatively, it is determined whether the vibrational energy change for measurement segments in proximity to the at least one measurement segment exceeds a predefined spatial extent SE. For example, the vibrational energy change may be observed at measurement segments up to several 100 meters away from the impact location. Hence, it is determined whether a data cluster DC representing the vibrational energy change is present in the vibration data VD. By determining a data cluster DC in the vibration data VD, an energy change is detected in a universal way, i.e. not being dependent on a specific signal shape or signal origin. Referring to figure 3, a data cluster DC is a cluster in the vibration data which has an extension in the x-axis and/or the y-axis. In other words, events E0 to E4 may form data clusters. The continuous signal CS (e.g. bridge) may not form a data cluster, since the vibrational energy changes neither in time nor in space.

In a step S4, an event signal ES is provided for the case that such data cluster DC is identified in the vibration data VD. In an example, the event signal ES is implemented as an alert that a potentially hazardous event took place along the linear asset 10 monitored by the fiber optic sensor 20.

In another example, the event signal ES is implemented as data structure based on the data cluster DC. This can mean that in an optional step S41 the event signal ES is output data that is provided to a user and/or a computing network and/or to an artificial intelligence for classifying the type of event represented by the event signal ES. The event signal ES can be a piece of data corresponding to the data cluster DC, or it may be data derived from the data cluster DC. For example, the event signal ES contains information about an impact location, and/or an amplitude of the vibrational energy change, and/or a velocity of propagation of seismic/acoustic waves along the linear asset 10, and/or a frequency band of the vibration data VD, and/or a duration D of the vibrational energy change, and/or its spatial extent SE in terms of measurements segments in which the vibrational energy change is detected. In other words, the vibration data VD is filtered and/or pre-selected such that only data is transmitted to the user, the computing network and/or the artificial intelligence that belongs to potentially interesting events. Thus, the amount of data to be classified is reduced, thereby avoiding bandwidth issues.

In an optional step S31 shown in figure 4, it is determined whether the data cluster DC in the vibration data VD represents a normal operating mode of the linear asset 10. For that case, the event signal ES is suppressed. In the example, where the linear asset 10 is a railway track, the normal operating mode can be the movement of a rail vehicle. Such an event, as shown as event E0 in figure 3, may not form an event of interest. The method may determine a normal operating mode by means of a suitable algorithm. For example, the method may recognize a specific pattern in the vibration data VD that is caused by the movement of a rail vehicle. If the linear asset 10 is a road, for example, the normal operating mode may refer to the movement of a road vehicle, e.g. car.

In an optional step S32 shown in figure 4, multiple detections of data clusters DC that are close in time and/or space are combined into a single detection. For example, if rockfall occurs, multiple measurement segments at different locations might be affected, and respective impacts of the same rockfall could be separated in time. However, as detected data clusters DC belong to the same event, in this case rockfall, they may be treated as one combined data cluster DC. Step S32 could be implemented in such a way that if a distance between data clusters in space and/or time is below a predefined limit, the clusters are treated as a single data cluster DC.

The shown method of figure 3 can be realized as computer program product. This can mean that the program comprises instructions which, when the program is executed by a computer, cause the computer to carry out the method according to figure 3.

Furthermore, as shown in figure 4, the method may comprise the further optional step S11 of selecting at least one predetermined frequency band of the vibration data VD for determining the vibrational energy change. The vibration data VD may contain a plurality of frequency bands of vibrational energy at the measurement segments. However, only few frequency bands may be of interest and/or may be sufficient for monitoring the linear asset 10. Thus, the vibration data VD may be filtered in frequency. It is also possible for the vibration data VD to be filtered and/or pre-processed with respect to categories other than frequency. In particular, the vibration data VD on which basis data clusters DC are determined can be raw data or can be data derived from the raw data. Derived data may form subsets of the vibration data VD. In other words, a first subset of the vibration data VD may refer to a first frequency band of the vibration data VD, while a second subset of vibration data VD may refer to a second frequency band of the vibration data VD. It also possible that further subsets of the vibration data VD refer to derivatives of the vibration data VD.

If the method comprises the step S11 for selecting a predetermined frequency band or another subset of the vibration data VD, the method may further comprise steps S2', S3', S31', and/or S32' for analyzing and processing the vibration data VD with respect to different frequency bands and/or subsets. For detailed description of the steps S2', S3', S31', and/or S32' is referred to the above-mentioned steps S2, S3, S31, and S32, respectively. Thus, determining whether a data cluster DC representing the vibrational energy change is present in the vibration data VD can be simultaneously performed for a plurality of subsets of the vibration data VD. Respective identified data clusters DC for the plurality of subsets may be combined according to a predefined rule to provide the event signal ES. For example, if X out of Y analyzed subsets show respective data clusters, X and Y being natural numbers, an event signal ES is provided indicating that an event took place. In particular, if the vibration data VD is analyzed in three distinct frequency bands and data clusters DC are present in only two frequency bands, and event signal ES may be provided, or may not be provided, based on the predefined rule.

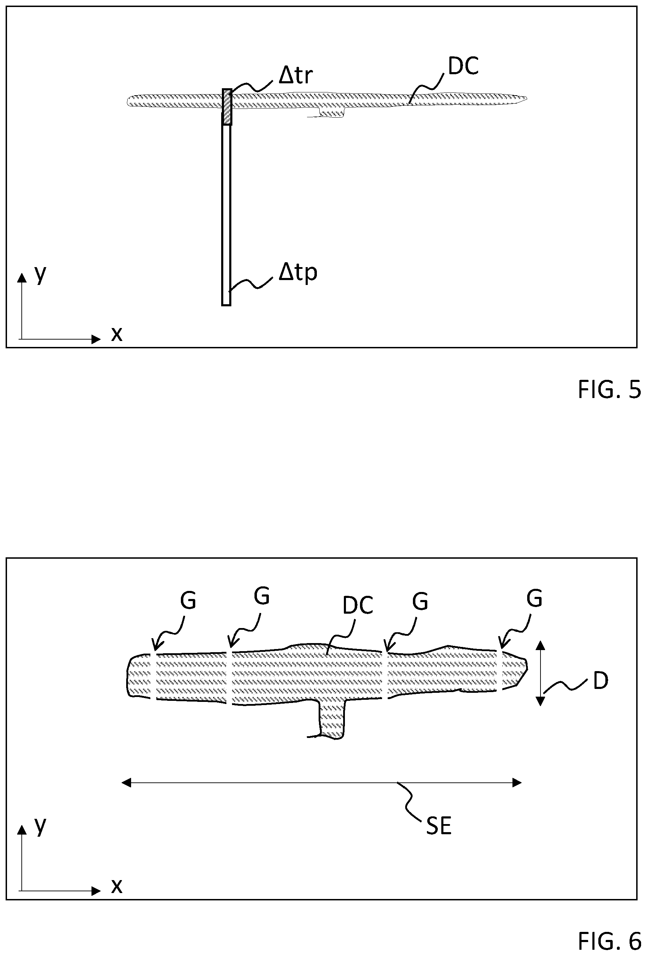

The step S2 of determining whether a vibrational energy change during a recent time window Δtr in at least one measurement segment exceeds a predefined amplitude may comprise Z-score normalization of the vibration data VD for each measurement segment 22, 23. In particular, a vibration data sample for calculating the Z-score is updated in real time. The vibration data sample for calculating the Z-score includes vibration data VD of the recent time window Δtr and vibration data VD of a past time window Δtp, wherein a ratio between the duration of the recent time window and the duration of the past time window is constant and less than 1. This is illustrated in figure 5 based on a representation of vibration data VD including a data cluster DC. Figure 5 shows a recent time window Δtr and a past time window Δtp for one dedicated measurement segment. However, such time windows can be formed for each of the plurality of measurements segments 22, 23. The time windows can be calculated for all measurement segments 22, 23 using a computationally efficient "rolling" method. This can mean that with each new element (new measurement value) of a respective time window the oldest element (old measurement value) is removed. For example, the recent time window Δtr covers the most recent one to ten seconds of the measurement time. The past time window Δtp may cover at least the last 30 seconds of the measurement time. As such, the Z-score of each measurement segment can be calculated as follows:

$$Z\_score\,(t) = \frac{\mu_r(t+tr) - \mu_p(t+tp)}{\sigma_p(t+tp)},$$

with $\mu_r(t + tr)$ being the mean value of the recent time window Δtr, $\mu_p(t + tp)$ being the mean value of the past time window Δtp, and $\sigma_p(t + tp)$ being the standard deviation of the past time window Δtp. By calculating the z-scores of each measurement segment 22, 23, a vibrational energy change can be determined, which in turn supports determination of a data cluster DC in the vibration data VD, as shown in figure 5.

In figure 6 a data cluster DC is shown in the vibrational data VD, which corresponds to a vibrational energy change of a certain spatial extent SE and a certain duration D. As can be seen in figure 6, the data cluster DC comprises gaps G at some locations or measurement segments, respectively. These measurement segments do not show a vibrational energy change, for example because the fiber optic cable 21 is poorly coupled to the environment at these locations. However, determining the spatial extent SE of the vibration energy change may comprise applying a tolerance function for disrespecting measurement segments that are not showing the vibrational energy change, such that a data cluster DC can be identified even if some measurements segments are not affected by the impact. For example, the tolerance function is implemented in such a way, that not more than three, or five, or ten unaffected measurement segments in a row may lie within a group of affected measurement segments to identify the analyzed portion of vibration data VD as data cluster DC.

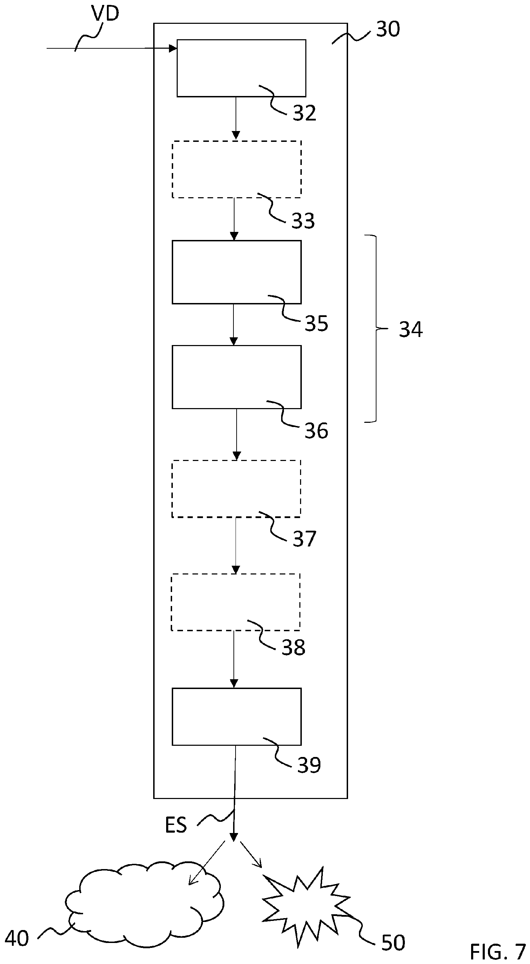

With figure 7 an exemplary embodiment of a data processing system 30 is shown. The data processing system 30 comprises a receiving unit 31 configured to receive vibration data VD, wherein the vibration data VD is inferred by backscattered laser light from a fiber optic cable 21 and contains information of vibrational energy at a plurality of measurement segments 22, 23 of the fiber optic cable. For further description it is referred to step S1 of figure 3.

The data processing system 30 further comprises an evaluation unit 34 configured to determine whether a vibrational energy change during a recent time window Δtr in at least one measurement segment exceeds a predefined amplitude, and if the predefined amplitude is exceeded, to determine whether the vibrational energy change in the at least one measurement segment exceeds a predefined duration D, and/or whether the vibrational energy change for measurement segments in proximity to the at least one measurement segment exceeds a predefined spatial extent SE, thereby determining whether a data cluster DC representing the vibrational energy change is present in the vibration data VD. The evaluation unit 34 may be divided into two or more sub-units. For example, a first sub-unit 35 can be implemented as Z-score normalizer to determine whether a vibrational energy change during a recent time window Δtr in at least one measurement segment exceeds a predefined amplitude. It is referred to step S2 of the method for further description. For example, a further sub-unit 36 can be implemented as transient energy detector to determine whether the vibrational energy change in the at least one measurement segment exceeds a predefined duration D, and/or whether the vibrational energy change for measurement segments in proximity to the at least one measurement segment exceeds a predefined spatial extent SE. Thus, the transient energy detector may determine whether a data cluster DC representing the vibrational energy change is present in the vibration data VD. It is referred to step S3 of the above-described method for further description.

The data processing system 30 further comprises a transmitter unit 39 configured to provide an event signal ES for the case that such data cluster DC is identified in the vibration data VD. It is referred to step S4 of the method for further description. For example, the event signal ES is realized as alert 50. It is however also possible that the event signal ES is output data based on the data cluster DC. In this case, the event signal ES may be transmitted to a user and/or a computing network and/or to an artificial intelligence for classifying a type of event represented by the event signal ES. In figure 7, a computing network and/or an artificial intelligence is depicted as computing cloud 40.

The data processing system 30 may comprise further components corresponding to steps S11, S31 and/or S32 of the above-described method. In particular, the system 30 may comprise a processing unit 33 configured to process the vibration data VD, particularly to filter the vibration data VD in frequency space. It may further comprise a suppressor unit 37 configured to suppress the event signal ES in a case, in which it is determined that the data cluster DC in the vibration data VD represents a normal operating mode of the linear asset 10. The system 30 may further comprise a detections associator or merger unit 38. The detections associator or merger unit 38 is configured to evaluate event detections from several different frequency filters and/or vibration data subsets and combine those detections into a single detection, according to a pre-defined combination rule, as described above. In addition or alternatively, the detections associator or merger unit 38 is configured to combine multiple detections that are very close in time and space into a single detection, as described in connection with step S32 of the method.

The embodiments of the computer-implemented method, the data processing system 30 and the computer program product disclosed herein have been discussed for the purpose of familiarizing the reader with novel aspects of the idea. Although preferred embodiments have been shown and described, many changes, modifications, equivalents, and substitutions of the disclosed concepts may be made by one having skill in the art without unnecessarily departing from the scope of the claims.

It will be appreciated that the disclosure is not limited to the disclosed embodiments and to what has been particularly shown and described hereinabove. Rather, features recited in separate dependent claims or in the description may advantageously be combined. Furthermore, the scope of the disclosure includes those variations and modifications, which will be apparent to those skilled in the art and fall within the scope of the appended claims.

The term "comprising", insofar it was used in the claims or in the description, does not exclude other elements or steps of a corresponding feature or procedure. In case that the terms "a" or "an" were used in conjunction with features, they do not exclude a plurality of such features. Moreover, any reference signs in the claims should not be construed as limiting the scope.

Reference numerals

| | |
|---|---|
| 10 | linear asset |
| 20 | fiber optic sensor |
| 21 | fiber optic cable |
| 22 | measurement segment |
| 23 | further measurement segment |
| 25 | detection unit |
| 30 | data processing system |
| 32 | receiving unit |
| 33 | processing unit |
| 34 | evaluation unit |
| 35 | Z score normalizer |
| 36 | transient energy detector |
| 37 | suppressor unit |
| 38 | detection association unit / merger unit |
| 39 | transmitter unit |
| 40 | network/ cloud/ artificial intelligence |
| 50 | alert |
| 98 | person |
| 99 | rail vehicle |
| E,E0-E4 | event |
| ES | event signal |
| CS | continuous signal |
| D | duration |
| DC | data cluster |
| G | data gap |
| SE | spatial extent |
| S1-S41 | steps |
| x1 | first position |
| x2 | second position |
| VB | vibration data |
| $\Delta$tp | past time window |
| $\Delta$tr | recent time window |

**Claims**

1. Computer-implemented method, the method comprising:

- receiving (S1) vibration data (VD), wherein the vibration data (VD) is inferred by back-scattered laser light from a fiber optic cable (21) and contains information of vibrational energy at a plurality of measurement segments (22, 23) of the fiber optic cable (21),
- determining (S2) whether a vibrational energy change during a recent time window ($\Delta$tr) in at least one measurement segment exceeds a predefined amplitude,
- if the predefined amplitude is exceeded, determining (S3) whether the vibrational energy change in the at least one measurement segment (22, 23) exceeds a predefined duration (D), and/or whether the vibrational energy change for measurement segments in proximity to the at least one measurement segment (22, 23) exceeds a predefined spatial extent (SE), thereby determining whether a data cluster (DC) representing the vibrational energy change is present in the vibration data (VD), and
- providing (S4) an event signal (ES) for the case that such data cluster (DC) is identified in the vibration data (VD) .

2. Computer-implemented method according to the preceding claim, wherein the method is carried out during monitoring a linear asset (10), along which the fiber optic cable (21) is arranged.

3. Computer-implemented method according to claim 2, wherein the linear asset (10) is one of a railway track, a road, a pipeline, a power line, a cable, and a fence.

4. Computer-implemented method according to one of the preceding claims, wherein the event signal (ES) indicates at least one type of event (E), in particular: movement of a human, an animal or an object; movement of a rail vehicle; movement of rail vehicle over a broken or damaged rail; partial or complete derailment of a rail vehicle; rockfall; land slide; debris flow; flash over; maintenance work; thermal material expansion; leaking pipe; digging.

5. Computer-implemented method according to one of the preceding claims, wherein the fiber optic cable (21) is arranged along a linear asset (10), and the method further comprises determining (S31) whether the data cluster (DC) in the vibration data (VD) represents a normal operating mode of the linear asset (10) and suppressing the event signal (ES) for that case.

6. Computer-implemented method according to one of the preceding claims, further comprising transmitting (S41) the event signal (ES) to a user and/or a computing network (40) and/or to an artificial intelligence for classifying a type of event (E) represented by the event signal (ES).

7. Computer-implemented method according to one of the preceding claims, wherein determining (S2) whether a vibrational energy change during a recent time window ($\Delta$tr) in at least one measurement segment exceeds a predefined amplitude comprises Z-score normalization of the vibration data (VD) for each measurement segment (22, 23) .

8. Computer-implemented method according to the preceding claim, wherein a vibration data sample for calculating the Z-score is updated in real time.

9. Computer-implemented method according to the preceding claim, wherein the vibration data sample for calculating the Z-score includes vibration data (VD) of the recent time window ($\Delta$tr) and vibration data (VD) of a past time window ($\Delta$tp), wherein a ratio

between the duration of the recent time window and the duration of the past time window is constant and less than 1.

10. Computer-implemented method according to one of the preceding claims, wherein determining the spatial extent (SE) of the vibration energy change comprises applying a tolerance function for disrespecting measurement segments in proximity to the at least one measurement segment (22, 23) that are not showing the vibrational energy change.

11. Computer-implemented method according to one of the preceding claims, further comprising selecting (S11) at least one predetermined frequency band of the vibration data (VD) for determining the vibrational energy change.

12. Computer-implemented method according to one of the preceding claims, wherein determining (S3) whether a data cluster representing the vibrational energy change is present in the vibration data (VD) is simultaneously performed for a plurality of subsets of the vibration data (VD), wherein respective identified data clusters (DC) are combined according to a predefined rule to provide the event signal (ES).

13. Data processing system (30), comprising:

- a receiving unit (31) configured to receive vibration data (VD), wherein the vibration data (VD) is inferred by back-scattered laser light from a fiber optic cable (21) and contains information of vibrational energy at a plurality of measurement segments (22, 23) of the fiber optic cable,
- an evaluation unit (34) configured to determine whether a vibrational energy change during a recent time window ($\Delta$tr) in at least one measurement segment (22, 23) exceeds a predefined amplitude, and if the predefined amplitude is exceeded, to determine whether the vibrational energy change in the at least one measurement segment (22, 23) exceeds a predefined duration (D), and/or whether the vibrational energy change for measurement segments in proximity to the at least one measurement segment (22, 23) exceeds a predefined spatial extent (SE), thereby determining whether a data cluster (DC) representing the vibrational energy change is present in the vibration data (VD), and
- a transmitter unit (39) configured to provide an event signal (ES) for the case that such data cluster (DC) is identified in the vibration data (VD).

14. Data processing system (30) according to the preceding claim, further comprising a processing unit (33) configured to process the vibration data (VD), in particular to filter the vibration data (VD) in frequency space.

15. Computer program product comprising instructions which, when the program is executed by a computer, cause the computer to carry out the method according to one of claims 1 to 12.

FIG. 1

FIG. 2

FIG. 3

FIG. 4

FIG. 5

FIG. 6

VD

30

32

33

35

36

34

37

38

39

ES

40

50

FIG. 7

Europäisches
Patentamt

European
Patent Office

Office européen
des brevets

**EUROPEAN SEARCH REPORT**

Application Number

EP 24 18 5681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 360 989 A1 (FRAUSCHER SENSOR TECH GROUP GMBH [AT]) 1 May 2024 (2024-05-01) | 1-4,10, 12,13,15 | INV. G01H9/00 |
| Y | * paragraph [0002]; figure 2 * <br> * paragraph [0044] - paragraph [0048] * | 5-9,11, 14 | B61K9/08 B61L1/06 |
| Y | WO 2023/089302 A1 (FOTECH GROUP LTD [GB]) 25 May 2023 (2023-05-25) <br> * claim 1 * | 5,6 | |
| Y | CN 114 684 217 A (UNIV WUHAN TECH) 1 July 2022 (2022-07-01) <br> * the whole document * | 7-9 | |
| Y | US 2019/225250 A1 (ESPREY CHRIS [GB] ET AL) 25 July 2019 (2019-07-25) <br> * paragraphs [0001], [0016], [0017] * | 11,14 | |
| A | US 2022/341774 A1 (TANAKA TOSHIAKI [JP]) 27 October 2022 (2022-10-27) <br> * paragraph [0131]; claim 1 * | 1-15 | |
| A | US 2015/285927 A1 (NEDILKO BOHDAN [CA] ET AL) 8 October 2015 (2015-10-08) <br> * paragraph [0006] - paragraph [0007]; figure 1 * | 1-15 | TECHNICAL FIELDS SEARCHED (IPC) <br> G01H <br> B61L <br> B61K |

The present search report has been drawn up for all claims

| Place of search | Date of completion of the search | Examiner |
|---|---|---|
| The Hague | 29 November 2024 | Lorne, Benoît |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 5681

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | | Publication date | Patent family member(s) | | | Publication date |
|---|---|---|---|---|---|---|---|
| EP | 4360989 | A1 | 01-05-2024 | EP | 4360989 | A1 | 01-05-2024 |
| | | | | TW | 202432413 | A | 16-08-2024 |
| | | | | WO | 2024089088 | A1 | 02-05-2024 |
| WO | 2023089302 | A1 | 25-05-2023 | EP | 4433785 | A1 | 25-09-2024 |
| | | | | US | 2024353254 | A1 | 24-10-2024 |
| | | | | WO | 2023089302 | A1 | 25-05-2023 |
| CN | 114684217 | A | 01-07-2022 | NONE | | | |
| US | 2019225250 | A1 | 25-07-2019 | AU | 2017289698 | A1 | 24-01-2019 |
| | | | | CN | 109641604 | A | 16-04-2019 |
| | | | | EP | 3478553 | A1 | 08-05-2019 |
| | | | | ES | 2886453 | T3 | 20-12-2021 |
| | | | | JP | 6923566 | B2 | 18-08-2021 |
| | | | | JP | 2019522197 | A | 08-08-2019 |
| | | | | KR | 20190022814 | A | 06-03-2019 |
| | | | | NZ | 749992 | A | 31-07-2020 |
| | | | | PL | 3478553 | T3 | 20-12-2021 |
| | | | | US | 2019225250 | A1 | 25-07-2019 |
| | | | | WO | 2018002582 | A1 | 04-01-2018 |
| US | 2022341774 | A1 | 27-10-2022 | JP | 7315011 | B2 | 26-07-2023 |
| | | | | JP | WO2021059477 | A1 | 01-04-2021 |
| | | | | US | 2022341774 | A1 | 27-10-2022 |
| | | | | WO | 2021059477 | A1 | 01-04-2021 |
| US | 2015285927 | A1 | 08-10-2015 | AU | 2009267754 | A1 | 14-01-2010 |
| | | | | CA | 2728105 | A1 | 14-01-2010 |
| | | | | CN | 102123899 | A | 13-07-2011 |
| | | | | EP | 2300299 | A1 | 30-03-2011 |
| | | | | HK | 1159572 | A1 | 03-08-2012 |
| | | | | US | 2011313671 | A1 | 22-12-2011 |
| | | | | US | 2015285927 | A1 | 08-10-2015 |
| | | | | WO | 2010003220 | A1 | 14-01-2010 |

EPO FORM P0459

For more details about this annex : see Official Journal of the European Patent Office, No. 12/82